# EUROPEAN PATENT APPLICATION

(11) **EP 2 405 551 A2**
(43) Date of publication of application: **11.01.2012**
(21) Application number: 11172939.8
(22) Date of filing: 06.07.2011
(51) Int. Cl.: H02J 3/00

(54) **Ring power distribution loop**

(30) Priority: 07.07.2010 US 831289
(71) Applicant: Hamilton Sundstrand Corporation, Windsor Locks, CT 06096-1010 (US)
(72) Inventor: Maier, Josef, 86754 Munningen (DE)
(74) Representative: Tomlinson, Kerry John

(57) **Abstract**

A power loop (22) is formed by a plurality of loop segments connectable by switches to form the power loop. The power loop is configured to receive power from a plurality of power sources (24, 26, 28, 30). The switches connect the power loop to a plurality of components (32, 34, 36, 38, 40). A method is also disclosed and claimed.

## Description

### BACKGROUND

This application relates to power distribution for use on a vehicle, such as an aircraft, wherein the power is distributed across a loop that can be closed at any point through connecting the loop segments.

Modern aircraft are typically provided with power buses that distribute power to a plurality of AC and DC users. Examples may be pumps for gas turbine engines, galleys, and any number of other components mounted on the vehicle. Typically, the power buses extend along the length of the aircraft, and have two distinct ends.

Sources of power, typically gas turbine engines, drive generators to supply power to the buses. It is often the case that the components, including the power users, and the power sources, are connected or disconnected to and from the bus by electromechanical switches. Such switches can fail.

### SUMMARY

A power loop is formed by a plurality of loop segments connectable by switches to form the power loop. The power loop is configured to receive power from a plurality of power sources. The switches connect the power loop to a plurality of components. A method is also disclosed and claimed.

These and other features of the present invention can be best understood from the following specification and drawings, the following of which is a brief description.

### BRIEF DESCRIPTION OF THE DRAWINGS

Figure 1 schematically shows an aircraft power loop.
Figure 2 shows a solid state switch.
Figure 3A shows a first control scheme that is provided by the Figure 1 system.
Figure 3B shows a second control scheme.
Figure 3C shows another control scheme.

### DETAILED DESCRIPTION

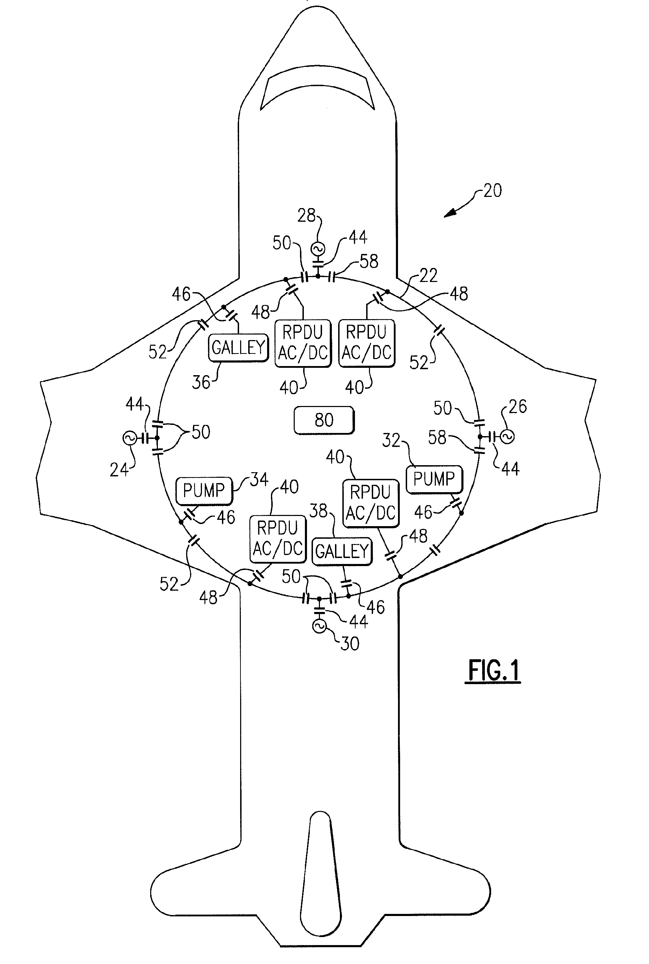

Figure 1 shows an aircraft 20 incorporating a power ring or loop 22. The power loop 22 is utilized in place of the prior linear power buses. While the term "loop" is utilized, it should be understood that the loop 22 is likely not circular, as illustrated. Rather, "loop" merely refers to the fact that the power loop 22 is a loop that can be closed at any point through connecting the loop segments, and has no apparent "end." In a sense, it is likely the shape of the loop 22 would be dictated by the shape of the vehicle, such as aircraft 20, and the location of the components that are interconnected by the loop 22.

Several sources of power 24, 26, 28, and 30 supply power through switches 44 to the loop 22. The sources of power 24, 26, 28, 30 may be gas turbine engines driving generators for either AC and or DC generation. The switches 44 may be traditional mechanical switches.

The power loop 22 powers a number of components. As examples only, galleys 36 and 38, pumps 32 and 34, and AC/DC power converters 40 may receive power from the loop 22. The power converters 40 convert AC power into DC power, and then communicate with any number of other components that are driven by DC power. While the power loop 22 is shown conveying AC power, with the local power converters 40 being AC/DC converters (they can also be AC/AC converters), it should be understood that the loop 22 could convey DC power, and the power converters 40 could be DC/DC converters. In addition, should the loop 22 convey DC power, the power converters 40 could also be DC/AC converters, allowing the provision of AC power to localized locations without the existence of a separate AC bus.

When the loop 22 conveys AC power to local power converters 40, it allows the elimination of the prior art DC busses.

Further, converters 40 can include the connection of a battery, or other DC power source which may be charged from the loop 22 through the converters 40.

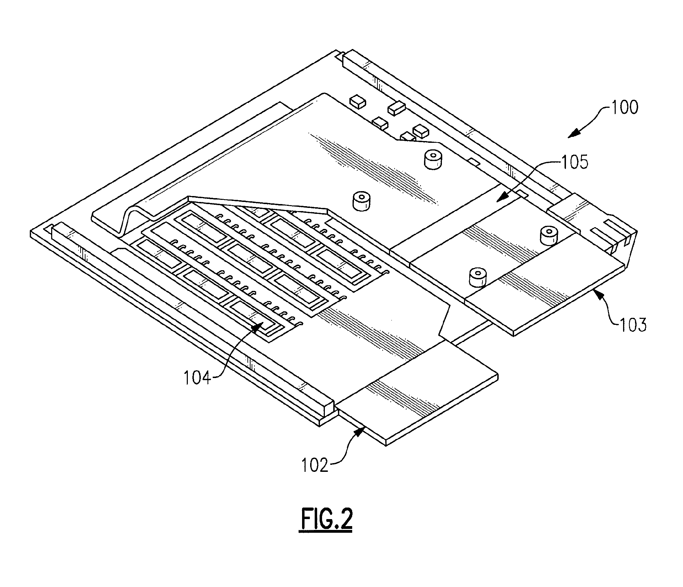

As can be seen, switches 46 connect the AC components to the loop 22, such as pumps 32, 34 and galleys 36, 38. The power converters 40 are connected to the loop 22 through switches 48. The switches 46 and 48 may be semiconductor solid state switches, and could be called component switches. Embodiments of such switches are known in the art. An example of switch 46, 48 is shown in Figure 2 at 100.

As shown in Figure 2, an exemplary switch 100 may have an input connection 102, and an output connection 103. A current sensing device 105 is incorporated into the switch 100. In addition, a number of switching elements 104 are incorporated. This is merely an example of a semi-conductor solid state switch, and other examples of such switches would come within the scope of this application.

Returning to Figure 1, switches 50 connect or isolate each of the sources of power 24, 26, 28, and 30 from the loop 22. Switches 52 could be called bus switches. Switches 50 could be called source switches. In addition, switches 52 allow isolation of sections of the loop 22 as will be explained below. Switches 50 and 52 may also be semiconductor solid state switches. All of the switches 46, 48, 50, and 52 are connected to a common control 80 such that the control can define switching patterns to provide power supply as is desired. The control can include one or more microcontrollers, memory, input/output interfaces, and/or additional circuitry configured to achieve the referenced control functions.

With the power loop 22, power can now flow from any one of the sources in either direction (clockwise or counter-clockwise) and any one of the power supplies can power any one of the components being powered.

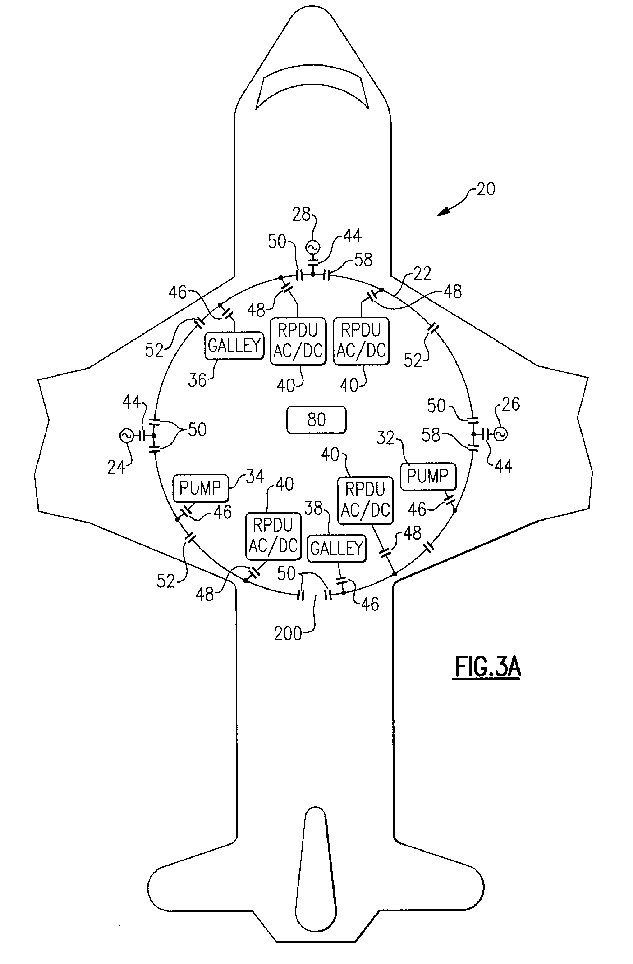

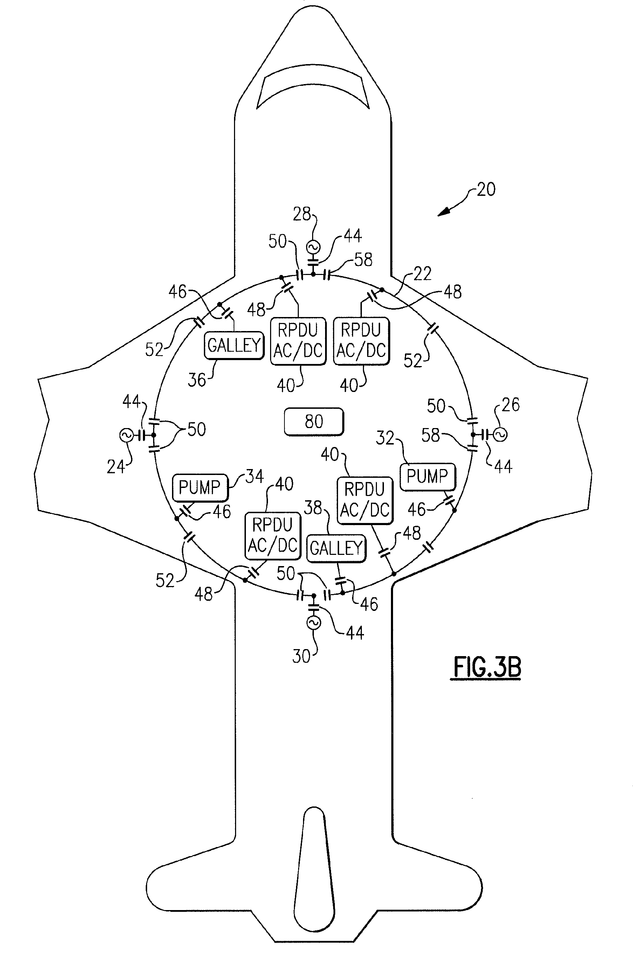

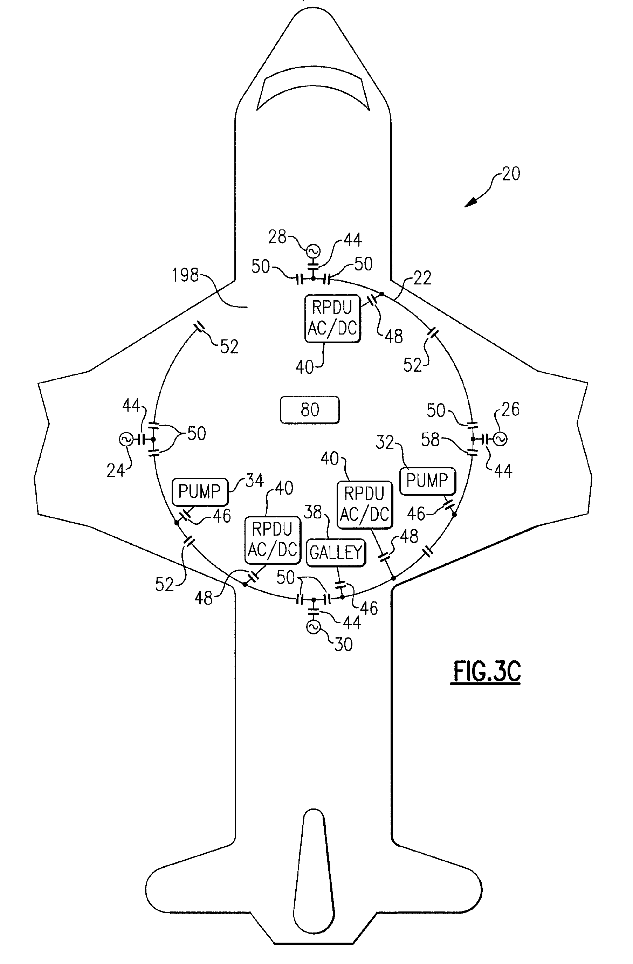

In addition, the closed loop nature provides powerful control schemes, such as shown in Figures 3A, 3B, and 3C. In Figure 3A, the power source 30 of Figure 1 has failed. Thus, its switches 50 are opened to isolate the power source from the loop 22. Now, power can flow to all of the components from the power sources 24, 26, and 28 in either direction.

In addition, the opening and closing of the switches can be done in a similar manner to force the power supply from any one of the sources in only one direction. As an example, Figure 3B shows one of the switches 50 open on the power source 30. The power will flow in the opposed or clockwise direction. In this way, an imbalance in the amount of generated power from any one of the sources can be compensated for easily.

Figure 3C shows another control scheme wherein an entire section 198 of the loop 22 is opened between a source switch 50 and a bus switch 52, such as if components of lesser importance are depowered while components of greater importance remain powered. This scheme may be used, as an example, if there is a shortage of power.

Alternatively, the control scheme as shown in Figure 3C may be helpful should there be a failure in the components which are isolated from the power in the section 198.

The present invention thus provides the ability to have a smart power system with controls for all of the switches to achieve desired power supply for efficient and reliable operation.

Although an embodiment of this invention has been disclosed, a worker of ordinary skill in this art would recognize that certain modifications would come within the scope of this invention. For that reason, the following claims should be studied to determine the true scope and content of this invention.

## Claims

1. A power loop system comprising:
a plurality of loop segments connectable by switches (50, 52) to form a power loop (22) , wherein said power loop is configured to receive power from a plurality of power sources (24, 26, 28, 30) ; and
component switches (46, 48) connecting said power loop to a plurality of components (32, 34, 36, 38, 40).

2. The system as set forth in claim 1, wherein said power sources (24, 26, 28, 30) include electric generators.

3. The system as set forth in claim 2, wherein said electric generators are powered by one or more gas turbine engines.

4. The system as set forth in claim 1, 2 or 3 wherein each of said power sources (24, 26, 28, 30) are provided with source switches (50) such that said power sources can be isolated from said power loop (22).

5. The system as set forth in claim 4, wherein said component switches (46, 48) and said source switches (50) include solid state switches.

6. The system as set forth in claim 4 or 5, wherein said source switches (50) may be opened to isolate any one of said power sources (24, 26, 28, 30).

7. The system as set forth in claim 4, 5 or 6 wherein there are source switches (50) on each side of said power sources (24, 26, 28, 30), and one of said source switches associated with one of said power sources can be opened with the other maintained closed such that power from said one power source can travel in a particular direction.

8. The system as set forth in claim 7, wherein said power loop includes bus switches (52) which may be opened to isolate some of said plurality of components (32, 34, 36, 38, 40) from said power loop (22).

9. The system as set forth in claim 8, wherein said bus switches (52) are solid state switches.

10. The system as set forth in claim 8 or 9, wherein said source switches (50) and said bus switches (52) are spaced along said power loop (22) such that two of said source switches and said bus switches may be opened to isolate any loop segment of said power loop.

11. The system as set forth in any one of claims 4 to 10, wherein
said power loop (22) interconnects each of said plurality of power sources in a loop that can be closed at any point through the plurality of loop segments; and wherein both of said source switches on each side of any of said power sources may be opened to isolate said any one of said power sources.

12. A method of operating a power loop (22) comprising the steps of:
(a) supplying power to a power loop from a plurality of power sources, (24, 26, 28, 30) said power loop interconnecting each of said plurality of power sources in a closed loop; and
(b) connecting said power loop to a plurality of components (32, 34, 36, 38, 40).

13. The method as set forth in claim 12, including the step of opening a switch (50) to isolate any one of said power sources.

14. The method as set forth in claim 12, including the step of opening a switch (50) on one side of at least one power source (24, 26, 28, 30) with a switch on an opposed side maintained closed such that power from said at least one power source travels in a particular direction.

15. The method as set forth in claim 12, 13 or 14, including the step of opening switches (52) to isolate any one section of said power loop (22).
